# EUROPEAN PATENT APPLICATION

(11) **EP 1 484 702 A1**
(43) Date of publication of application: **08.12.2004**
(21) Application number: 03742672.3
(22) Date of filing: 24.02.2003
(51) Int. Cl.: G06F 17/60

(54) **CHARGING METHOD, INFORMATION SYSTEM, AND PROGRAM**

(30) Priority: 25.02.2002 JP 2002047831
(71) Applicant: Tatsuki, Hiroshi, Nagoya-shi, Aichi 465-0082 (JP); Ukai, Yukitaka, Nagoya-shi, Aichi 464-0086 (JP); Sato, Tsuyoshi, Gifu-shi, Gifu 500-8455 (JP)
(72) Inventor: Tatsuki, Hiroshi, Nagoya-shi, Aichi 465-0082 (JP); Ukai, Yukitaka, Nagoya-shi, Aichi 464-0086 (JP); Sato, Tsuyoshi, Gifu-shi, Gifu 500-8455 (JP)
(74) Representative: Vetter, Hans, Dipl.-Phys.Dr.
(86) International application number: PCT/JP2003/002005
(87) International publication number: WO 2003/071461

(57) **Abstract**

A charging method for readily settling payment. A mobile phone (30) accesses a center server (10) so as to input a command to purchase a serial number priced at 80 yen. The mobile phone (30) downloads the serial number and displays it as in the form of "SNxxxx". At this time, 80 yen is added to the charge on the mobile phone. A client PC (20) accesses the center server (10), displays the page which is the entrance for displaying a pay content, allows the user to input the serial number displayed on the mobile phone (30) on the page through, e.g., the keyboard of the client PC (20) so as to transmit the serial number. On receiving the serial number, the center server (10) transmits the page information on the pay content to the client PC (20) when the received serial number coincides with the serial number transmitted to the mobile phone (30).

## Description

### TECHNICAL FIELD

This invention relates to a charging method for carrying out charging a terminal user for a center, using a charging system for a mobile phone, and an information system, etc. which implements the charging method.

### BACKGROUND ART

There is a known system in which a user orders an article through a web page on the Internet and settles the charge for the article by credit card.

In such a system, information of an article or services is transmitted to a terminal from a web server, etc. connected to the Internet and displayed in a browser of the terminal, for example. When the server receives a command for an order for the article or services from the terminal, the server transmits, to the terminal, information that urges the user to input a credit card number, etc. for payment of the consideration (charge). The server, when receiving the credit card number inputted and transmitted from the terminal, executes a charging process in which authentication of the credit card number, etc. and settlement of the charge are requested from a computer of a credit card company, in order that the charge for the article or services is paid.

However, many users feel uncomfortable transmitting their credit card number from the terminal via the Internet due to security problems. The aforementioned system is not very suitable for the settlement of charges. On the other hand, in case of other settling methods, e.g., a bank transfer, it is necessary to pay a transfer fee and a process of the transfer takes time and effort. Especially, when the charged amount is small, the transfer fee may become larger than the charged amount.

### DISCLOSURE OF THE INVENTION

One object of the present invention is to provide a charging method and an information system, etc. which solve the aforementioned problems and allow a user to pay charges without difficulty.

In order to solve the aforementioned problems, a charging method, according to claim 1, uses a charging system that charges for downloading information. The information can be displayed on a mobile phone and is subject to be charged, i.e., subject-to-charge information. Charging a terminal user is carried out for a center which can be connected to the terminal via a network. In the charging method, it is determined whether information inputted by the user and transmitted to the center from the terminal is subject-to-charge information downloaded to the mobile phone. When the information is the subject-to-charge information, designated data to be sent after the charging is confirmed is transmitted to the terminal.

Accordingly, a user purchases the subject-to-charge information via the mobile phone and enters into the terminal the subject-to-charge information displayed on the mobile phone, in order to readily obtain on the terminal the designated data (like a pay content) to be sent after the charging is confirmed. For example, the charge for the pay content, etc. used on the terminal can be readily paid through the charge for the mobile phone. Moreover, it is possible to use the pay content, etc. immediately after the purchase.

If a PC is used as a terminal, a large-sized display can be adopted and various functions can be implemented, for instance. Therefore, the PC is suitable for the supply of article information and pay contents. However, the PC necessitates the use of a credit card or a bank transfer for the payment for an article and pay contents. This is hard to use for the user. On the other hand, a mobile phone has a small display and fewer functions, for example. Therefore, it may not be suitable for supplying the article information and pay contents. However, the charging system for charging downloading has been already established by mobile phone companies or Internet Service Providers (ISP) and so on. Such a charging system sums up the charge for the subject-to-charge information, the use fee for the mobile phone or the use fee for the ISP, and the charge for downloading data from various sites, per a predetermined period (e.g., per month), and charges the sum to the user account, etc. Accordingly, the user can make the payment to the administrator of the center from the terminal through the payment of the charge for the subject-to-charge information. Specifically, the payment for a small amount can be settled extremely easy and at a low cost.

For instance, the administrator of the center makes an agreement in that the mobile phone company or the ISP, which controls data transmission of the mobile phone, charges the user for downloading the subject-to-charge information and transfers part or all of the charges to an account of the administrator, e.g., per month. On the other hand, for example, the center is provided with a first server having a function of storing and generating the subject-to-charge information and a second server which "transmits, to the terminal, designated data to be sent after the charging is confirmed in case the information entered by the user and transmitted to the center from the terminal is the subject-to-charge information downloaded to the mobile phone", as set forth in claim 1. The "designated data to be sent after the charging is confirmed" set forth in claim 1 may be, e.g., information for displaying on the terminal an input screen for destination address of the article, information showing that the charge has already been paid, or information about a pay content or information for guiding the user to such information (such as link information and redirect information).

In this manner, the user, when buying an article or information, downloads and displays the subject-to-charge information transmitted from the first server to the mobile phone, inputs the displayed subject-to-charge information into the terminal, and transmits the information from the terminal to the second server via a network. As a result, the user can obtain, as designated information, the information for displaying destination address of the article, information showing that the charge has already been settled, information about a pay content, etc.

More particular charging method can be adopted as set forth in claim 2. According to the charging method set forth in claim 2, the subject-to-charge information is transmitted to the mobile phone, and the charging process accompanying the transmission of the subject-to-charge information is executed. The information is received from the terminal and if the information received from the terminal is the subject-to-charge information transmitted to the mobile phone, the designated data to be sent after the charging is confirmed is transmitted to the terminal.

Accordingly, the user can turn the charge for obtaining the designated information from the center into the charge for downloading the subject-to-charge information received by the mobile phone. Accordingly, it is possible to provide the charging method which allows easy settlement of the charge.

The subject-to-charge information is the information which can be entered into the terminal by the user. For example, the information may be a serial number. Additionally, the subject-to-charge information may be generated from the phone number of the mobile phone, as set forth in claim 3.

The aforementioned charging method can be implemented by the information system as set forth in claims 5-11, for example.

The information system as set forth in claim 5 comprises a subject-to-charge information transmission device that transmits the subject-to-charge information to the mobile phone, a charging device that charges the subject-to-charge information transmitted to the mobile phone by the subject-to-charge information transmission device, a reception device that receives information from the terminal via a network, a determination device that determines whether the information received from the terminal by the reception device is the subject-to-charge information transmitted by the subject-to-charge information transmission device, and a data transmission device that transmits, to the terminal, designated data to be sent after the charging is confirmed if the determination device determines that the information received from the terminal by the reception device is the subject-to-charge information transmitted by the subject-to-charge information transmission device.

Accordingly, the user makes the mobile phone receive and display the subject-to-charge information, enters the displayed subject-to-charge information into the terminal, and transmits the subject-to-charge information in order to obtain on the terminal the designated data to be sent after the charging is confirmed. That is, the user enters into the terminal the subject-to-charge information displayed on the mobile phone to receive the designated data (e.g. pay content) to be sent after the charging is confirmed. In this manner, the charge to be paid to the center by the user of the terminal which is connected to the center via a network can be carried out by means of the charging system for charging the downloading of the subject-to-charge information to the mobile phone. Moreover, the designated data to be sent after the charging for a pay content, etc. is confirmed can be easily transmitted to the user who downloads the subject-to-charge information through the mobile phone. As a result, payment of the charge can be easily made.

According to the information system as set forth in claim 5, for example, the user, when purchasing an article or services, makes the mobile phone receive and display the subject-to-charge information. The user inputs the displayed subject-to-charge information into the terminal and transmits the subject-to-charge information from the terminal to the information system. With only the above operation, the user can obtain data or information for receiving the article, e.g., as the designated data. In this manner, it is possible to easily settle the charge using the mobile phone and obtain the data after the purchase.

Specifically as set forth in claim 6, it is preferable that the information system is provided with a subject-to-charge information generation device that generates the subject-to-charge information transmitted by the subject-to-charge information transmission device, and a subject-to-charge information storage device that stores the subject-to-charge information generated by the subject-to-charge information generation device. The determination device may perform the aforementioned determination based on whether the information received from the terminal by the subject-to-charge information storage device is stored in the subject-to-charge information storage device.

With the above constitution, the subject-to-charge information can be altered as required and thus unauthorized use of the information can be easily prevented.

Specifically as set forth in claim 7, the subject-to-charge information generation device may generate the subject-to-charge information based on the phone number of the mobile phone to which the subject-to-charge information is transmitted. In this manner, for example, validity of the subject-to-charge information can be easily confirmed and the unauthorized use can be readily prevented.

If the price of the subject-to-charge information downloaded to the mobile phone is the same as the price of the pay content, etc. used on the terminal, only the input of the subject-to-charge information from the terminal allows the user to use the pay content, etc. However, if the prices are different, an excess or deficiency in the charge occurs. Therefore, as set forth in claim 8, it is preferable that a new piece of subject-to-charge information is generated from a plurality of subject-to-charge information to be transmitted to the mobile phone, or as set forth in claim 9, a plurality of subject-to-charge information are generated from one piece of the subject-to-charge information to be transmitted to the mobile phone, so that the excess or deficiency can be adjusted.

Moreover, the aforementioned respective devices can be implemented by a plurality of processing devices. Specifically as set forth in claim 10, it is preferable that the mobile phone is designed to obtain the subject-to-charge information via a network of a carrier and that the terminal is capable of being connected to the Internet. The system comprises a carrier processing device controlled by the carrier and including the subject-to-charge information generation device, subject-to-charge information transmission device, and the charging device; a content provider processing device including the reception device and data transmission device, and which conducts reception by the reception device or transmission by the transmission device from and to the Internet; and an authentication provider processing device including the subject-to-charge information storage device and the determination device.

As in the above, if the subject-to-charge information is generated in the carrier processing device and transmitted to the mobile phone, it is possible to readily execute the charging process using the existing charging device such as a so-called mobile phone charging system owned by a carrier and a use fee charging system of an ISP, etc. Furthermore, since the subject-to-charge information storage device and the determination device are provided in the authentication provider processing device, management of the subject-to-charge information can be separated from the carrier processing device and the content provider processing device. Safe management of the subject-to-charge information can be easily achieved. Specifically if the information system has the constitution as set forth in claim 7, personal information such as the mobile phone number can be easily protected. Communication between the carrier processing device and the authentication provider processing device may be conducted through an exclusive line. This constitution allows safe exchanges of the subject-to-charge information.

If the information system is managed by a mobile phone company or an ISP, for example, the charge for the downloading of the subject-to-charge information can be added to the aforementioned use fee of the mobile phone or use fee of the ISP for a predetermined period (e.g. per month) and settled through the user account, etc. On the other hand, if the information system is managed by a company other than the mobile phone company or ISP which has a charging system, the charging process can be a process that makes the charging system charge the mobile phone user, as set forth in claim 11, for example. An example of such a process is a process for transmitting charge information to a charging system via a network.

The subject-to-charge information can be, for instance, image data or audio data, as set forth in claim 12. It is preferable that the information is text data, e.g., serial number. In this case, the user only downloads the text data to the mobile phone, inputs the text data into the terminal and makes the terminal transmit the data to the information system, in order to obtain the designated information. Accordingly, the payment and acquisition of data after the payment can be extremely smooth and easy.

As set forth in claim 4, the process steps for implementing the charging method according to one of claims 1-3 can be provided in the form of a computer program for executing the steps. Also, as set forth in claim 13, if any functions as the information system according to one of claims 5-12 are implemented in a computer, for example, the functions can be provided in the form of a computer program. Such a program can be recorded to computer readable recording media like flexible discs, magnetooptical discs, CD-ROMs, hard discs, ROMs, RAMs, etc. and downloaded to a computer for execution as required. Or, the program can be loaded via a network for execution.

### BRIEF DESCRIPTION OF THE DRAWINGS

Fig. 1 is a block diagram showing a constitution of an information system according to a first embodiment;

Fig. 2 is a flowchart illustrating a process flow for generating one serial number from a plurality of serial numbers;

Fig. 3 is a flowchart illustrating a process flow for generating a plurality of serial numbers from one serial number;

Fig. 4 is a flowchart continuing from the flowchart in Fig. 3;

Fig. 5 is a block diagram showing another constitution of the information system according to the first embodiment;

Fig. 6 is a block diagram showing a constitution of an information system according to the second embodiment;

Fig. 7 is a flowchart illustrating a process flow in a carrier computer;

Fig. 8 is a flowchart illustrating a flow of a password storage process in a password storage computer;

Fig. 9 is a flowchart illustrating a process flow in a network server;

Fig. 10 is a flowchart illustrating a process flow in a password authentication computer; and

Fig. 11 is a flowchart illustrating a flow of a password confirmation process in the password storage computer.

### BEST MODE FOR CARRYING OUT THE INVENTION

Preferred embodiments of the present invention will be explained hereafter, by way of the accompanying drawings. The present invention is not limited to the embodiments below, and can be embodied in various ways without departing from the technical scope of the invention.

### [First Embodiment]

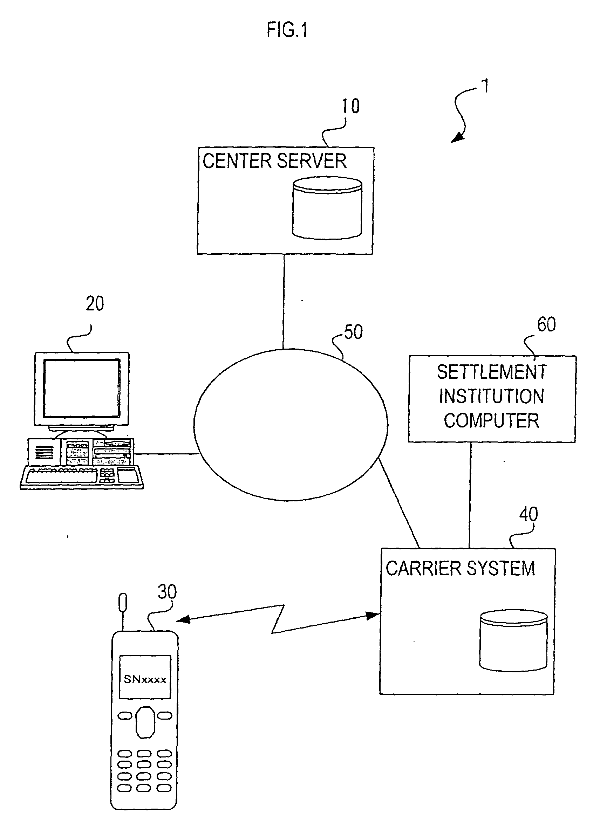

As shown in Fig. 1, an information system 1 of the present embodiment comprises a center server 10 which corresponds to an information system and a center in claims; a client PC 20 which is communicable with the center server 10 via the Internet 50 and corresponds to a terminal in claims; and a mobile phone 30 which is communicable with the center server 10 via a carrier system 40.

The center server 10 is a commonly-used server computer, including, e.g., a CPU, a ROM, a RAM, a hard disc, various input/output interfaces. The server 10 also serves as a web server. That is, the center server 10 transmits, to the client PC 20, page information stored in the center server 10 or generated in the center server 10, in reply to a user access to the page information through a browser provided in the client PC 20.

The client PC 20 is a commonly-used personal computer capable of being connected to the Internet 50, including, e.g., a CPU, a ROM, a RAM, a hard disc, a display, various input/output interfaces. The client PC 20 is also provided with a browser and an email function. The client PC 20 accesses the center server 10 connected to the Internet 50 and receives page information (described in, e.g. HTML) to show the information on the display, or receives or uses various content information.

The mobile phone 30 is a commonly-used mobile phone including a browser. The mobile phone 30 accesses a web server connected to the Internet 50 to receive and display information from the web server.

The carrier system 40 receives radio wave transmitted from the mobile phone 30 to control communications, relay information transmitted from the mobile phone 30 to the Internet 50, or relay data addressed to the mobile phone 30 from the Internet to the mobile phone 30. Also, in order to carry out charging the user of the mobile phone 30 for the administrator of the center for downloading subject-to-charge information from the center server 10 through the mobile phone 30, the carrier system 40 executes a charging process for adding the fee for downloading the subject-to-charge information to the user fee of the center. The carrier system 40 then requests a settlement institution computer 60, e.g., a bank or a credit card company, to charge to the user account the call charge, etc. of the mobile phone 30 and the user fees of the respective centers per a specified period (e.g., on a monthly basis). When the user fees are transferred from the user account, the carrier system 40 requests the settlement institution computer 60 to transfer to the account of the administrator of the center server 10 a sum of the user fees of the center.

When the user accesses a pay content provided in the web server of the center server 10 via the browser of the client PC 20, the user downloads to the mobile phone 30 a serial number (password) as the subject-to-charge information having a price of the pay content. At that time, the carrier system 40 executes the aforementioned charging process for charging the user the price of the serial number.

For instance, the user accesses the center server 10 from the mobile phone 30 and inputs a command to purchase a serial number priced at 80 yen. The mobile phone 30 downloads the serial number and displays the serial number as in the form of, e.g., "SNxxxx". As a result, the user is charged 80 yen by the aforementioned charging process.

The user accesses the center server 10 via the browser of the client PC 20 and lets the browser display a page which is the entrance for displaying a pay content. The user inputs the serial number "SNxxxx" displayed on the mobile phone 30 on the page through, e.g., the keyboard of the client PC 20, to let the browser transmit the number.

The center server 10 receives the serial number "SNxxxx". Only when the received serial number coincides with the serial number "SNxxxx" transmitted to the mobile phone 30, page information of the pay content is transmitted to the client PC 20.

In this case, since the serial numbers coincide with each other, the pay content is displayed in the browser of the client PC 20.

In this manner, the charge for the pay content provided by the center server 10 on the Internet 50 can be settled with the call charge of the mobile phone 30. Accordingly, without transmitting a credit card number, charging and settlement of a small amount of fee can be readily made at a low cost.

In the present embodiment, the serial number corresponding to the amount of the charge is downloaded. However, the serial number may be generated in association with information relating to the user. For example, when the serial number is downloaded to the mobile phone 30, the phone number of the mobile phone 30 is obtained by the center server 10 via the carrier system 40 to generate a serial number using the phone number. The generated serial number, the phone number and the price (charged amount) are associated with each other and stored in a database (DB) of the center server 10. When the phone number and the serial number are transmitted from the client PC 20, the center server 10 compares the transmitted phone number, the serial number, and the price of the pay content with the serial number, the phone number, and the price stored in the database for confirmation. When the transmitted information and the stored information coincide, the page information of the pay content is transmitted to the client PC 20. With such a constitution, spoofing, etc. can be prevented.

When the price of the serial number downloaded to the mobile phone 30 in the above manner is equal to the price of the pay content used in the client PC 20, only an input of the serial number allows the user to use the pay content. However, when the prices are different, an excess or deficiency in payment occurs. Therefore, it is preferable that one serial number can be generated from a plurality of serial numbers (hereinafter, referred to as combination) or a plurality of serial numbers can be generated from one serial number (hereinafter, referred to as division) in order to adjust the excess or deficiency.

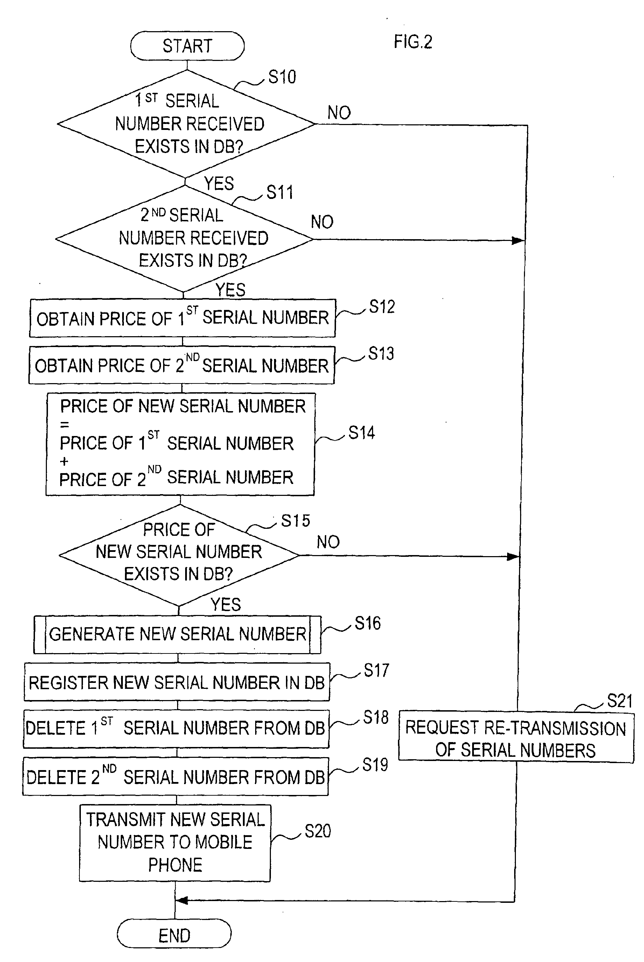

Fig. 2 shows a combination process of the serial number.

The user operates the mobile phone 30 and accesses a password combination site of the center server 10 from the mobile phone 30. The center server 10, in reply to the access from the mobile phone 30, transmits page information including a form for inputting two serial numbers to the mobile phone 30. The mobile phone 30 displays the form and urges the user to input two serial numbers. The mobile phone 30 transmits the two serial numbers inputted by the user to the center server 10.

The center server 10, when receiving the two serial numbers, executes the steps illustrated in Fig. 2.

In S10, it is determined whether a first serial number received exists in the database (DB). If the number exists (S10: YES), the process moves to S11. If not (S10: NO), the process moves to S21.

In S11, similar to S10, it is determined whether a second serial number received exists in the database (DB). If the number exists (S10: YES), the process moves to S12. If not (S10: NO), the process moves to S21.

In S12, the price of the first serial number is obtained from the database. In S13, the price of the second serial number is obtained from the database. In S14, the price of the first serial number and the price of the second serial number are added to calculate the price of a new serial number. In S15, it is determined whether the price of the new serial number exists in a price database. This price database stores in advance a list of prices capable of being charged. For instance, the price database stores price data such as 100 yen, 300 yen, and 500 yen. If the price of the new serial number exists in this price database (S15: YES), the process moves to S16. If not (S15: NO), the process moves to S21.

In S16, the new serial number is generated. In S17, the new serial number is associated with the price and registered in the database. In S18, the first serial number is deleted from the database. In S19, the second serial number is deleted from the database.

In S20, the new serial number is transmitted to the mobile phone 30.

On the other hand, in S21, re-transmission of serial numbers is requested to the mobile phone 30. For example, page information including the aforementioned form for inputting two serial numbers is transmitted together with a message requesting the re-transmission.

In this manner, one new serial number can be obtained from a plurality of serial numbers. Therefore, the price of the serial number and the price of the pay content can be made consistent easily. For example, it is also possible to combine the serial numbers purchased in advance for use.

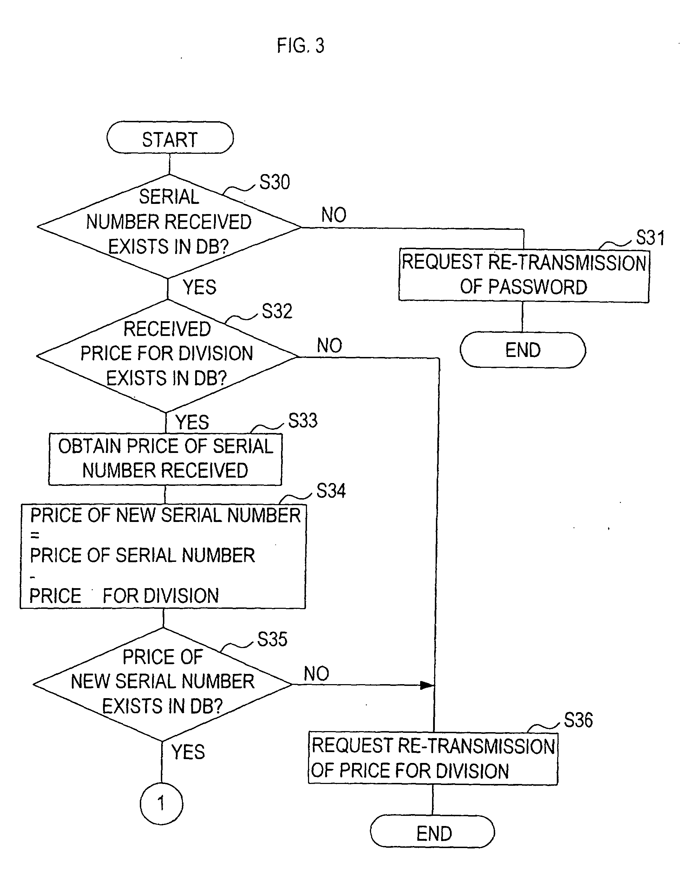

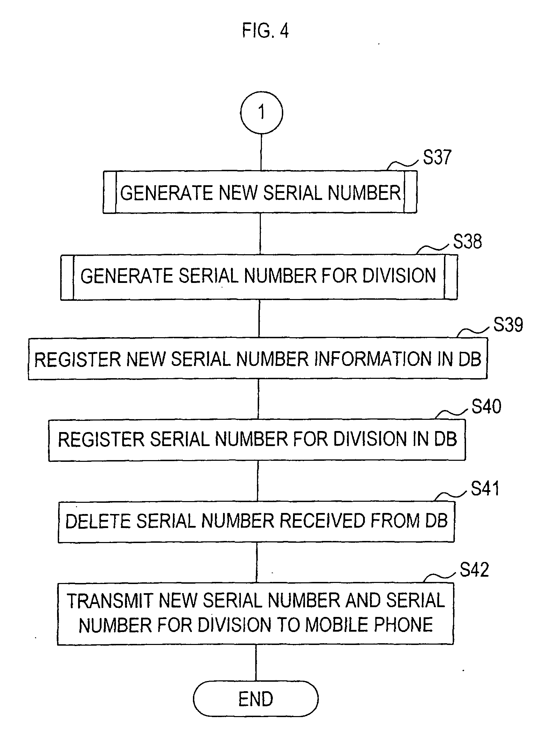

Figs. 3 and 4 show flowcharts of a serial number division process.

The user operates the mobile phone 30 and accesses a password division site of the center server 10 from the mobile phone 30. The center server 10, in reply to the access from the mobile phone 30, transmits page information including a form for inputting a serial number and a price for division to the mobile phone 30. The mobile phone 30 displays the form and urges the user to input a serial number. The mobile phone 30 transmits the serial number inputted by the user to the center server 10.

The center server 10, when receiving the serial number, executes the steps illustrated in Fig. 3.

In S30, it is determined whether the serial number received exists in the database (DB). If the number does not exist in the database (S30: NO), the process moves to S31. The process ends after re-transmission of a password is requested to the mobile phone 30. On the other hand, if the number exists in the database (S30: YES), the process moves to S32.

In S32, it is determined whether the price for division received exists in the price database. If the price exists (S32: YES), the process moves to S33. If not (S32: NO), the process moves to S36.

In S33, the price of the serial number received is obtained from the database. In S34, the price for division is subtracted from the price of the obtained serial number to calculate a price of a new serial number.

In S35, it is determined whether the price of the new serial number exists in the database. If the number exists in the database (S35: YES), the process moves to S37 in Fig. 4. If the number does not exist in the database (S35: NO), the process moves to S36.

In S36, the process ends after re-transmission of the price for division is requested to the mobile phone 30.

In S37, the new serial number is generated. In S38, the serial number for division is generated. In S39, the new serial number is associated with the price and registered in the database. In S40, the serial number for division is associated with the price and registered in the database. In S41, the serial number received is deleted from the database. In S42, the new serial number and the serial number for division are transmitted to the mobile phone 30.

In the above manner, one serial number is divided to obtain a plurality of serial numbers. Therefore, the price of the serial number and the price of the pay content can be made consistent easily.

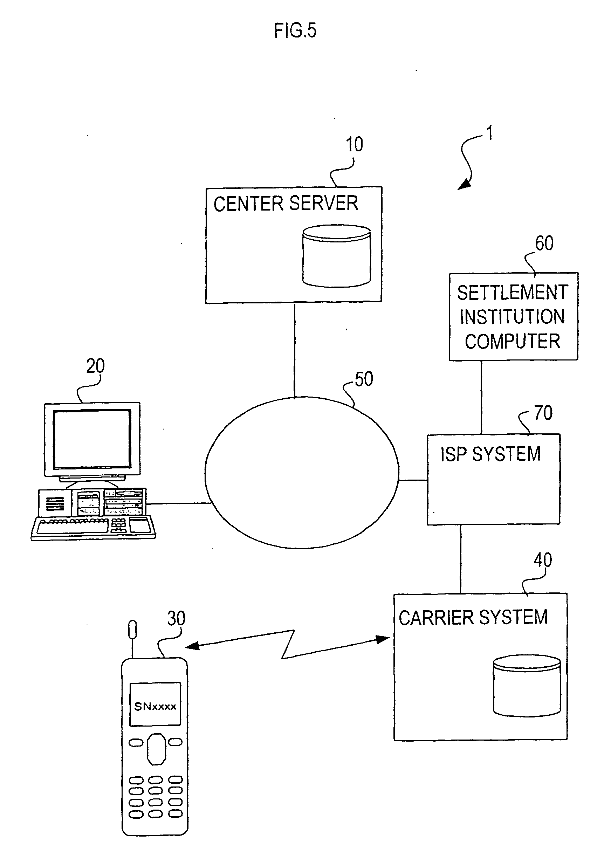

The information system 1 of the present invention can take various configurations other than the one shown in Fig. 1. For instance, the center server 10 may be included within the carrier system 40. Moreover, as shown in Fig. 5, if the mobile phone 30 and the center server 10 communicate via an ISP system 70, the charging process of the carrier system 40 may be executed in the ISP system 70. In this way, together with the user fee of the ISP, the charge for the pay content by the center server 10 can be settled.

### [Second Embodiment]

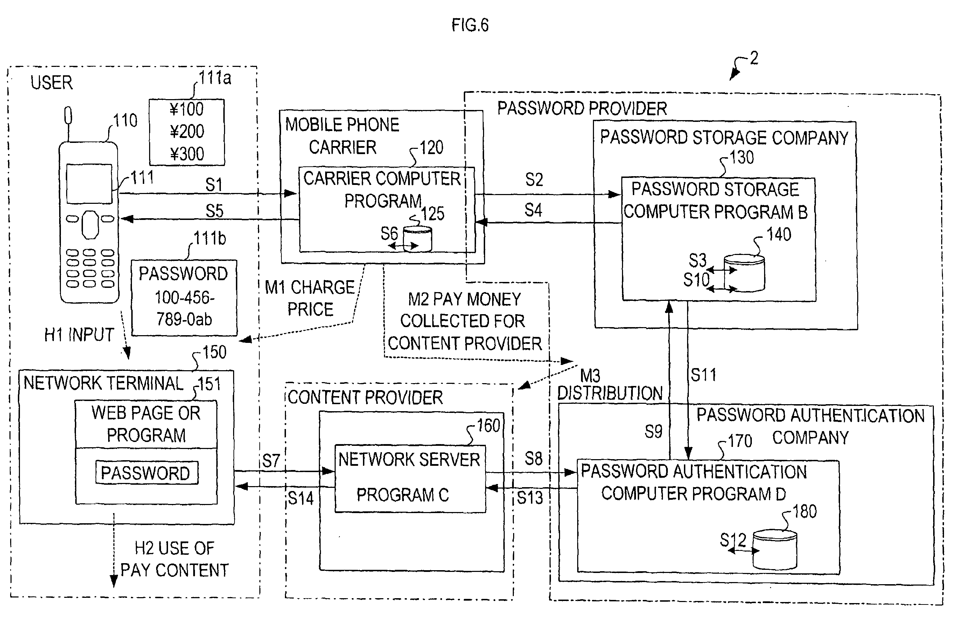

As shown in Fig. 6, an information system 2 of the present embodiment comprises a mobile phone 110, a carrier computer 120, a password storage computer 130, a password authentication computer 170, a network server 160, and a network terminal 150. The carrier computer 120, the password storage computer 130, and the password authentication computer 170 as a whole correspond to an information system and a center in claims. The network terminal 150 corresponds to a terminal in claims.

The mobile phone 110 is a commonly-used mobile phone owned by the user. In addition to the phone function, the mobile phone 110 has a communication function for displaying or performing contents provided in the carrier computer 120 and downloaded via packet communication.

The carrier computer 120 is a computer owned by a mobile phone carrier. The carrier computer 120 transmits content data at the request from the mobile phone 110 and charges the user for the transmission of the content (called download charge). A well-known example of such a system is i-mode® provided by NTT DoCoMo Inc.

The carrier computer 120 is entrusted with issuance of a password by a password provider and issues a password as the content data. The carrier computer 120 is also provided with a charge database 125 for storing the result of charging.

The password storage computer 130 is a computer owned by a password storage company which is the password provider. The password storage computer 130 is connected with the carrier computer 120 via an exclusive line. The password storage computer 130 includes a password storage database 140 and stores the password issued by the carrier computer 120.

The password authentication computer 170 is a computer owned by a password authentication company which is the password provider. The password authentication computer 170 is connected with the password storage computer 130 and includes a password authentication database 180.

The network server 160 is a server connected to the Internet. Via the Internet, the network server 160 serves as a web server which transmits a web page, etc. to the network terminal 150.

The network terminal 150 is an apparatus provided with a browser available to the user (e.g. owned by the user), including, e.g., a CPU, a ROM, a RAM, a hard disc, a display, various input/output interfaces. The network terminal 150 also includes a browser and an email function. The network terminal 150 accesses the network server 160 connected to the Internet to receive and display page information (described in, e.g., HTML), or receive and use various content information.

The carrier computer 120, the password storage computer 130, the password authentication computer 170, and the network server 160 are all commonly-used server computers including, e.g., a CPU, a ROM, a RAM, a hard disc, various input/output interfaces.

The carrier computer 120, in reply to the access from the mobile phone 110, transmits a screen 111a shown in Fig. 6 as the information (html data) to be shown on a display device by the browser of the mobile phone 110. This screen 111a contains a lineup of prices of purchasable passwords. The portions displaying the prices, i.e., "100 yen", "200 yen", and "300 yen", are respectively linked to a program A which generates a download-charge content corresponding to the displayed price. The portions displaying "100 yen", "200 yen", and "300 yen" in the screen 111a can be selected by a user operation of an operation portion, e.g., a button, on the mobile phone 110. If any portion is selected by the user operation, the mobile phone 110 accesses the program A linked to the selected portion (S1 in Fig. 6) and the program A is executed in the carrier computer 120.

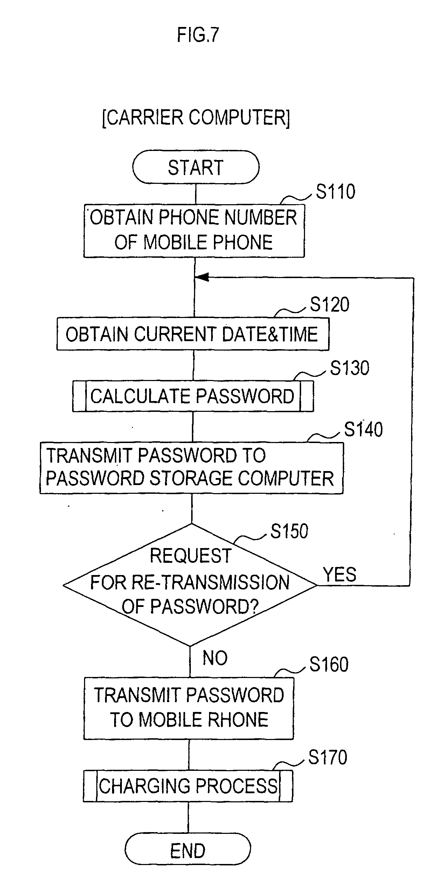

The carrier computer 120 executes the program A so as to perform a password generation process illustrated in the flowchart in Fig. 7.

In the password generation process shown in Fig. 7, in S110, the carrier computer 120 obtains the phone number of the mobile phone 110, which accesses the carrier computer 120, from a not-shown circuit switching apparatus provided by the mobile phone carrier. In S120, current date and time are obtained from a realtime clock provided in the carrier computer 120 and in S130, password calculation is performed based on the above information.

Detailed process steps for the password calculation are provided below.

1. Generate the following strings (text data) from the date and time obtained in S120.

① year month day hour minute second

② second minute hour day month year

2. Compare the generated values ① and ②. Subtract the smaller value from the larger value (subtraction (minus)).

3. Add the mobile phone number obtained in S110 to the value obtained in the second step (phase 1 password).

4. Encrypt the result obtained in the third step. It is preferable that an encryption coefficient (a password generation coefficient) used for the encryption is changed as required to generate a password having a different pattern per generation, for example. In this manner, by changing periodically the password generation coefficient, security against so-called password crack, etc. can be improved.

5. Convert the phase 1 password calculated in the third step into a string. Convert the string into numerals. Take out every two letters from the head to the end of the string to convert them into a numeral. Divide the obtained value by a number 36 to calculate the remainder. Repeat the foregoing operation as much as the number of letters in the string to generate a phase 2 password.

6. Add a price section to the phase 2 password generated in the fifth step to a specific letter position to generate a password.

Examples of passwords which can be generated are as follows. By adding hyphens to the generated passwords as below can determine the position of the price section. Also at the time of authentication, for example, it is possible to separate the price section from the others by reading in advance the positions of hyphen.

### Examples:

100-456-789-0ab (the part of 100 indicates 100 yen)

ABCD-abcd-E0 (the part of E0 indicates 500 yen)

12CD-5fg-1-00-100 (the part of -1- and the part of -100 are combined to be 1100; e.g., 1100 indicates 1,000 yen)

In S140 in Fig. 7, the password generated in S130 is transmitted to the password storage computer 130 via the exclusive line (S2 in Fig. 6). Since only the password is transmitted to the password storage computer 130, the anonymity of the purchaser is enhanced. Also, since the password is generated using the phone number of the mobile phone which has actually accessed the carrier computer 120, the issued valid password cannot be known from the network terminal 150. Therefore, the present system is not likely to be subject to password crack, for example.

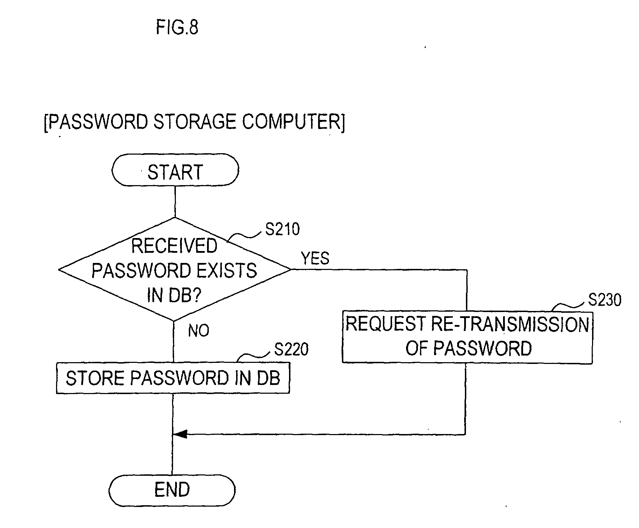

The password storage computer 130, when receiving the password from the carrier computer 120, executes the steps illustrated in a flowchart in Fig. 8.

That is, the password storage computer 130 searches the password storage database 140 for the password received from the carrier computer 120 via the exclusive line in S210 (S3 in Fig. 6). If the password received is not stored in the password storage database 140 (S210: NO), the process moves to S220 and the received password is stored in the password storage database 140. On the other hand, if the received password is stored in the password storage database 140 (S210: YES), re-transmission of the password is requested to the carrier computer 120 via the exclusive line (S4 in Fig. 6).

If the request for re-transmission of the password is made by the password storage computer 130 in S150 in Fig. 7 (S150: YES), the process moves to S120 and the carrier computer 120 re-generates and transmits the password again. In this manner, the password can be a unique value.

On the other hand, if there is no request for re-transmission of the password within a specified period (S150: NO), the process moves to S160.

In S160, the password is transmitted to the mobile phone (S5). As a result, the password appears on the display device of the mobile phone 110 as shown in the screen 111b in Fig. 6, for example.

In S170, a download fee is charged for downloading this password to the mobile phone 110. This charging method is the same with an existing download charging method (i.e., so-called charging for an official web page). As a result of the charging, for example, the mobile phone number and the charged amount (100 yen in the above example), the date and time when the downloading was made (the date and time when the password was transmitted), and a provider ID of the password provider which provides the program A, are associated and stored in the charge database 125 (S6 in Fig. 6).

In this manner, the user can display on the mobile phone 110 the password purchased at a price selected, by way of the conventional download charging method. The charge data stored in the charge database 125 are added up per user, e.g., every month, and billed to each user together with the mobile phone fee (M1 in Fig. 6). For instance, similar to the first embodiment, the data in the charge database 125 may be transmitted to a bank computer so that the amount is transferred from the user account to the account of the mobile phone carrier.

As described above, the computer which generates a password (carrier computer 120) and the computer which stores the password (password storage computer 130) are made separate. Moreover, the stored password does not directly include personal information, e.g., the mobile phone number. As a result, the security is maintained and the privacy is respected in the present system. A safe charging system can be provided.

The password displayed on the mobile phone 110 in the above manner can be used in sites on the Internet (e.g., the pages provided by the network server 160) which are responsive to such a password.

In other words, the user accesses the network server 160 containing a desired pay content through, e.g., the browser. The network server 160 transmits the information (html data) for showing a password input screen 151 on the display device of the network terminal 150 so that the password input screen 151 appears on the browser of the display device of the network terminal 150.

The user inputs on the screen 151 the password displayed on the mobile phone 110 through the input device, e.g., the keyboard, provided to the network terminal 150 (H1 in Fig. 6). The network terminal 150 transmits the inputted password to the network server 160 (S7 in Fig. 6).

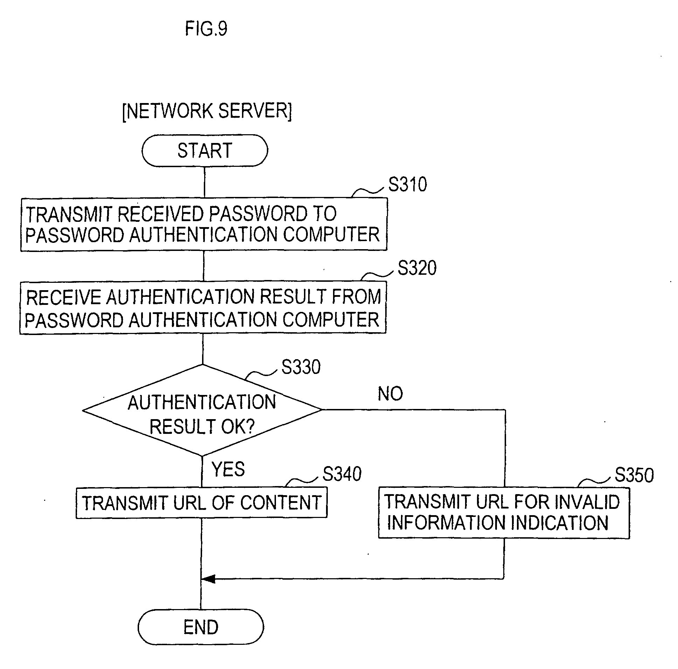

The network server, when receiving the password from the network terminal 150 via the Internet, executes the steps in a program C illustrated in a flowchart in Fig. 9.

In S310, the network server 160 transmits the received password to the password authentication computer 170 (S8 in Fig. 6).

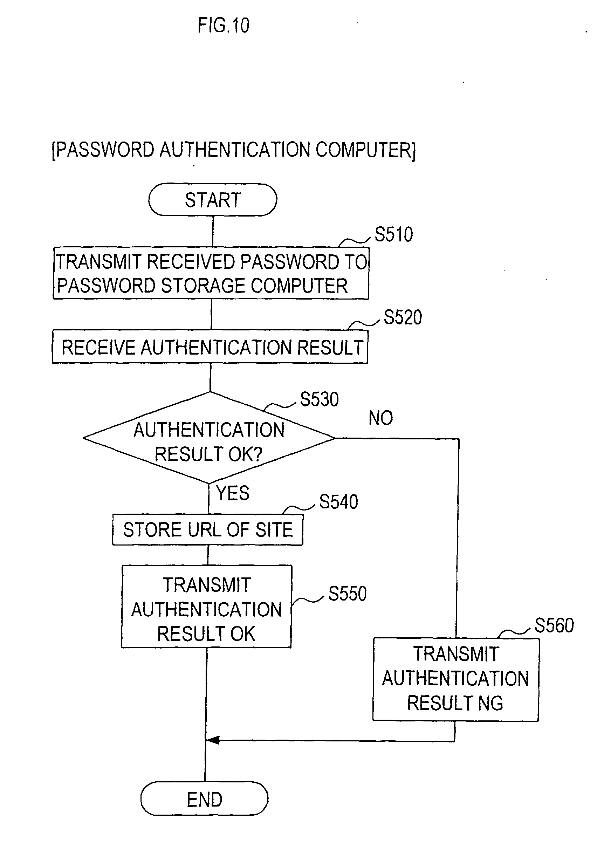

The password authentication computer 170 which received the password from the network server 160 executes the steps in a program D illustrated in a flowchart in Fig. 10.

In S510, the password authentication computer 170 transmits the password received from the network server 160 to the password storage computer 130 via the exclusive line (S9 in Fig. 6).

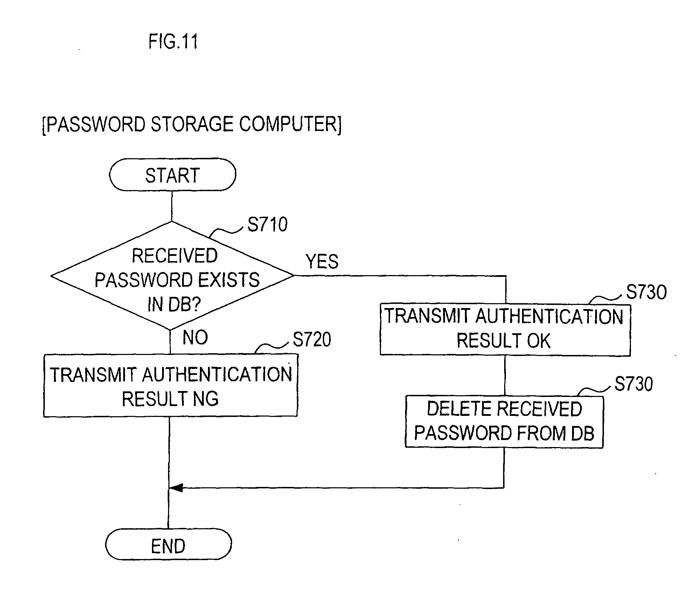

The password storage computer 130 which received the password from the password authentication computer 170 executes the steps in a program B illustrated in a flowchart in Fig. 11.

The password storage computer 130 searches the password storage database 140 for the password received from the password authentication computer 170 (S10 in Fig. 6). If the password received from the password authentication computer 170 is not stored in the password storage database 140 (S710: NO), the process moves to S720 and transmits the authentication result "NG" to the password authentication computer 170 (S11 in Fig. 6). On the other hand, if the password received from the password authentication computer 170 is stored in the password storage database 140 (S710: YES), the process moves to S730. As described in the above, since only the password comparison is necessary, the process can be executed at a high speed.

In S730, the authentication result "OK" is transmitted to the password authentication computer 170 (S11 in Fig. 6). In S740, this password is deleted from the password storage database. Deletion of the password from the database can prevent reuse of the password.

In S520 in Fig. 10, the password authentication computer 170 receives the authentication result from the password storage computer 130. In S530, the password authentication computer 170 determines whether the authentication result is "OK".

If the authentication result is "OK" (S530: YES), the process moves to S540. If the authentication result is "NG" (S530: NO), the process moves to S560.

In S540, a URL of the site of the network server 160 from which the password is transmitted is stored in the password authentication database 180. Then, the authentication result "OK" is transmitted to the network server 160 (S13 in Fig. 6).

On the other hand, if the authentication result is "NG" (S530: NO), the process moves to S560 and the authentication result "NG" is transmitted to the network server 160 (S13 in Fig. 6).

The network server 160 receives the authentication result from the password authentication computer 170 in S320 in Fig. 9. In S330, the network server 160 determines whether the authentication result is "OK".

If the authentication result is "OK" (S330: YES), the process moves to S340 and the URL of the pay content is transmitted to the network terminal 150 (S14 in Fig. 6). As a result, it is possible for the network terminal 150 to obtain the pay content from this URL.

On the other hand, if the authentication result is "NG" (S330: NO), the process moves to S350 and transmits to the network terminal 150 the URL where there is data for displaying the information that the password is invalid (i.e., data for displaying invalid information) on the network terminal 150 (S14 in Fig. 6). As a result, the information that the password is invalid is displayed on the network terminal 150.

As in the above, the user downloads and purchases the password through the mobile phone 110 and inputs the password downloaded and displayed on the mobile phone 110 in the site on the network server 160 accessed by the network terminal 150. As a result, the user can obtain the pay content existing in the URL transmitted from the network server 160 in the network terminal 150. Accordingly, the user can use or downloads the pay content, for example.

The respective payments charged to the user from the mobile phone carrier are summed, e.g., per month, per provider ID of each password provider stored in the charge database 125. The summed amount is transferred to the password provider account registered in advance. (M2 in Fig.6). The payments collected for content providers can be passed over to the password provider. The password provider distributes the share to each content provider in accordance with the proportion of each URL accessed by the user and stored in the password authentication database 180. Since a process of charging, payment collected for the content providers, and distribution of share is conducted in the above manner, the content provider is ensured to be paid for the pay content.

The above described information system 2 eliminates anxiety about the security problem relating to the transmission of a card number as in the conventional credit card settlement. Also, payment for the pay content can be safe and easy. For example, a password can be purchased in advance through the mobile phone 110. The password can be used to utilize contents, etc. on the network terminal 150.

The carrier computer 120 may be the ISP computer as in the first embodiment. In addition, the password storage database and the password authentication database 180 may be stored in a computer for database only and independent from the password storage computer 130 and the password authentication computer 170. The password storage computer 130 and the password authentication computer 170 may constitute one computer.

It is preferable, continuing from S360 in Fig. 9, for example, that the address of the network terminal 150 which transmits invalid passwords is stored. When the number of the attempted access with invalid passwords from the address exceeds a predetermined number, the steps after S310 are not executed even if there is further transmission of a password from the address. In this manner, the processing load of, e.g., network server 160, password authentication computer 170, and password storage computer 130, can be reduced in case of invalid password inputs (e.g., in case of mischief or unauthorized access).

### INDUSTRIAL AVAILABILITY

According to the charging method of the present invention described in the above, the user of the terminal purchases the subject-to-charge information through the mobile phone and inputs the subject-to-charge information displayed on the mobile phone into the terminal. Then, the user can easily obtain on the terminal the designated data (e.g., pay content) to be sent after the charging is confirmed. In other words, the user is allowed to pay the price of the pay content, etc. through the charge to the mobile phone and use the pay content, etc., for example, immediately after the purchase.

## Claims

1. A charging method using a charging system which charges for downloading subject-to-charge information which is information that can be displayed on a mobile phone and subject to be charged, charging a terminal user being carried out for a center which can be connected to the terminal via a network, wherein
the method comprising steps of determining whether information inputted by the user and transmitted to the center from the terminal is the subject-to-charge information downloaded to the mobile phone, and when the information is the subject-to-charge information, transmitting, to the terminal, designated data to be sent when the charging is confirmed.

2. A charging method comprising:
a first step of transmitting subject-to-charge information to a mobile phone;
a second step of executing a charging process accompanying the transmission of the subject-to-charge information in the first step;
a third step of receiving information from a terminal; and
a fourth step of transmitting designated data to be sent when the charging is confirmed to the terminal if the information received from the terminal in the third step is the subject-to-charge information transmitted to the mobile phone in the first step.

3. The charging method according to claim 1 or 2, wherein
said subject-to-charge information is generated based on a mobile phone number obtained from said mobile phone.

4. A program for implementing the charging method according to one of claims 1-3 on a computer.

5. An information system comprising:
a subject-to-charge information transmission device that transmits subject-to-charge information to a mobile phone;
a charging device that executes a charging process for charging for the subject-to-charge information transmitted to the mobile phone by the subject-to-charge information transmission device;
a reception device that receives information from a terminal through a network;
a determination device that determines whether the information received from the terminal by the reception device is the subject-to-charge information transmitted by the subject-to-charge information; and
a data transmission device that transmits, to the terminal, designated data to be sent when the charging is confirmed if the determination device determines that the information received from the terminal by the reception device is the subject-to-charge information transmitted by the subject-to-charge information transmission device.

6. The information system according to claim 5 further comprising:
a subject-to-charge information generation device that generates the subject-to-charge information transmitted by the subject-to-charge information transmission device; and
a subject-to-charge information storage device that stores the subject-to-charge information generated by the subject-to-charge information generation device; wherein
said determination device makes determination based on whether the information received from the terminal by the charging information storage device is stored in the subject-to-charge information storage device.

7. The information system according to claim 6, wherein
said subject-to-charge information generation device generates the subject-to-charge information based on a phone number of a mobile phone to which the subject-to-charge information is transmitted.

8. The information system according to claim 6 or 7, wherein
said subject-to-charge information storage device stores the subject-to-charge information in association with an amount charged for the subject-to-charge information;
the system further comprising:
a subject-to-charge information acquisition device that obtains a plurality of subject-to-charge information through a network; and
a new charge information generation device that determines whether all the subject-to-charge information obtained by the subject-to-charge information acquisition device are stored in the subject-to-charge information storage device, if all the subject-to-charge information are stored, generates a new piece of subject-to-charge information, stores the new piece of subject-to-charge information in the subject-to-charge information storage device in association with a sum of the amounts charged for all the obtained subject-to-charge information stored in the subject-to-charge information storage device, transmits the new subject-to-charge information to the mobile phone, and deletes all the obtained subject-to-charge information from the subject-to-charge information storage device.

9. The information system according to one of claims 6-8, wherein
said subject-to-charge information storage device stores the subject-to-charge information in association with an amount charged for the subject-to-charge information;
the system further comprising:
a subject-to-charge information acquisition device that obtains subject-to-charge information through a network; and
a new charge information generation device that determines whether the subject-to-charge information obtained by the subject-to-charge information acquisition device is stored in the subject-to-charge information storage device, if the subject-to-charge information is stored, divides into a plurality of charged amounts in such a manner that an amount charged for the subject-to-charge information stored in the subject-to-charge information storage device is a sum of the plurality of charged amounts, generates a plurality of new subject-to-charge information for which the plurality of charged amounts are respectively charged, stores the plurality of new subject-to-charge information in the subject-to-charge information storage device in association with the corresponding charged amounts, transmits the plurality of new subject-to-charge information to the mobile phone, and deletes the subject-to-charge information obtained by the subject-to-charge information acquisition device from the subject-to-charge information storage device.

10. The information system according to one of claims 6-9, wherein
said mobile phone obtains the subject-to-charge information via a network owned by a carrier and the terminal can be connected to the Internet,
the system comprising:
a carrier processing device including the subject-to-charge information storage device, the subject-to-charge transmission device, and the charging device and which is managed by the carrier;
a content provider processing device including the reception device and the data transmission device and which performs reception by the reception device and transmission by the transmission device from and to the Internet; and
an authentication provider processing device including the subject-to-charge information storage device and the determination device.

11. The information system according to one of claims 5-10, wherein
said charging process is a process for making a charging system charge a user of the mobile phone.

12. The information system according to one of claims 5-9, wherein
said subject-to-charge information is text data.

13. A program that makes a computer implement functions as the information system according to one of claims 5-12.
